# FASCICULE DE BREVET EUROPEEN

(11) **EP 1 070 212 B1**
(45) Date de publication et mention de la délivrance du brevet: **26.05.2004**
(21) Numéro de dépôt: 00901710.4
(22) Date de dépôt: 03.02.2000
(51) Int. Cl.: F16K 3/10, F01D 17/14

(54) **DISPOSITIF INTEGRE DE REGULATION DE SOUTIRAGE DESTINE A EQUIPER UNE TURBINE A VAPEUR**
INTEGRIERTER ENTNAHMEREGLER FÜR EINE DAMPFTURBINE
INTEGRATED REGULATING BLEED DEVICE FOR A STEAM TURBINE

(30) Priorité: 08.02.1999 FR 9901589
(43) Date de publication de la demande: 24.01.2001
(73) Titulaire: Alstom, 75116 Paris (FR)
(72) Inventeur: CAILLET, Jacques, F-75012 Paris (FR)
(74) Mandataire: de Lambilly Delorme, Marie Pierre
(86) Numéro de dépôt international: PCT/FR2000/000256
(87) Numéro de publication internationale: WO 2000/047921

(56) Documents cités:
- CH-A- 430 755
- DE-A- 1 550 406
- DE-A- 4 425 344
- US-A- 2 565 178
- US-A- 5 409 351
- PATENT ABSTRACTS OF JAPAN vol. 006, no. 069 (M-125), 30 avril 1982 (1982-04-30) & JP 57 009365 A (TOSHIBA CORP), 18 janvier 1982 (1982-01-18)

## Description

L'invention concerne le domaine des turbines à vapeur.

Plus précisément, l'invention concerne un dispositif destiné à équiper des turbines à vapeur dites à extraction réglée, communément qualifiée de soutirage réglé.

On rencontre ce type de turbine dans bon nombre de processus industriels dans lesquels on souhaite combiner production d'énergie électrique et régulation en pression d'un réseau de vapeur. Un tel réseau de vapeur est alimenté par un soutirage de vapeur effectué en cours de détente dans la turbine. Dans ce but, on utilise un organe de réglage du soutirage permettant de régler la pression d'extraction. La mesure de cette pression, nécessaire à sa régulation, peut être effectuée soit à proximité de l'organe en question, soit en un point relativement éloigné sur le réseau.

Dans l'état de la technique, une telle fonction de réglage du soutirage est assurée par des organes de types différents selon le type de turbine pouvant notamment être constitués par une soupape de réglage ou par une "gate valve".

La soupape de réglage est un organe externe à la veine vapeur et fonctionne comme une soupape de réglage classique. Bien qu'elle ne présente pas, a priori, de limitation restrictive de la pression d'extraction, elle montre cependant les inconvénients d'impliquer un encombrement axial conséquent nécessaire à son implantation, générateur de pertes de charge non négligeables.

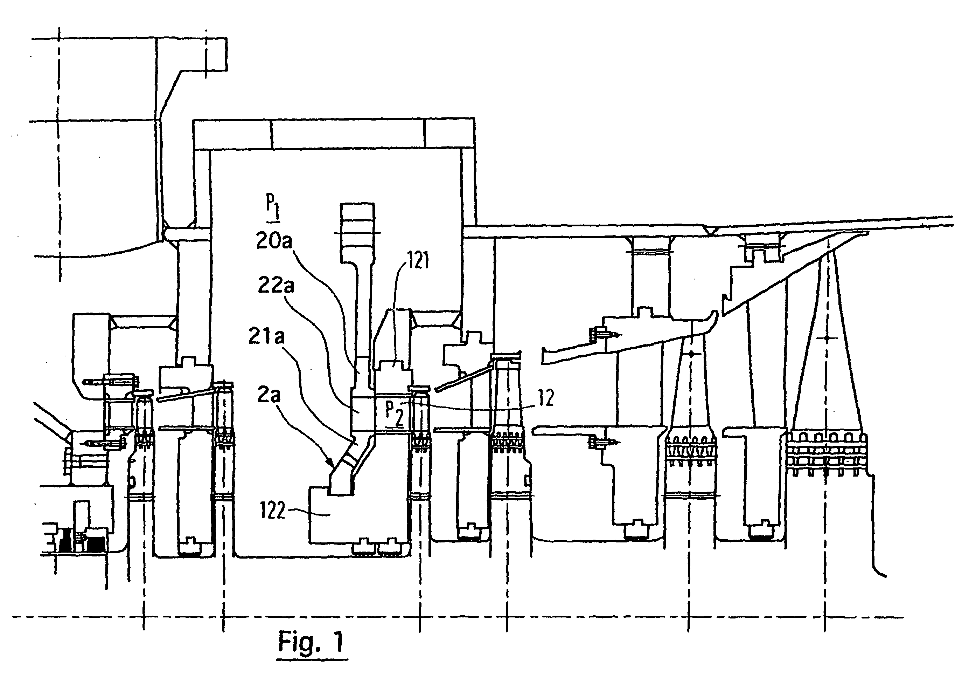

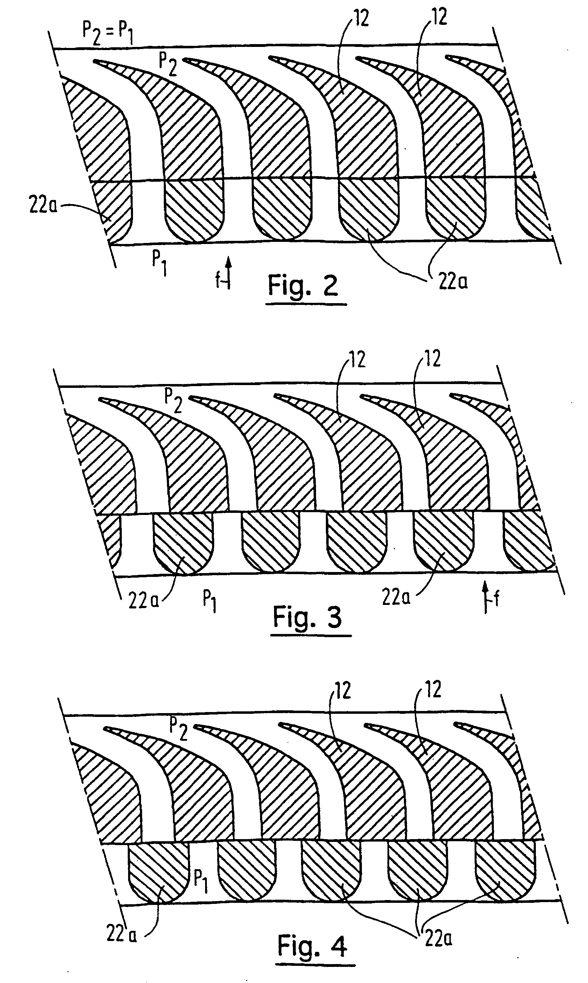

La "gate valve" se présente sous la forme d'un obturateur composé d'une partie fixe et d'une partie tournante. Elle s'insère entre deux étages successifs de la turbine. En référence à la Fig. 1, qui présente une telle "gate valve", la partie tournante 2a, ou disque régulateur, est constituée de deux couronnes concentriques, l'une interne 21a et l'autre externe 20a encadrant la partie amont des aubages distributeurs 22a. La partie fixe présente la même morphologie qu'un diaphragme, à la différence près qu'elle ne porte que la partie aval 12 des aubages distributeurs situés entre une couronne extérieure 121 et une couronne intérieure 122. A pleine ouverture la "gate valve" présente l'aspect d'un diaphragme classique. Cette configuration est mise en évidence sur les coupes développées d'aubages distributeurs de "gate valve" montrées aux fig. 2 (pleine ouverture), 3 (ouverture partielle) et 4 (fermeture totale). Le sens de la vapeur est figuré par la flèche f.

Si l'on appelle P1 la pression amont (voir fig. 1) et P2 la pression aval régnant dans la veine vapeur derrière le disque régulateur 2a, on voit que seule la face aval (arrière) des aubages 22a est soumise à la pression aval P2 alors que tout le reste de la face arrière du disque régulateur 2a est soumis à la pression amont P1 tout comme sa face avant (face amont).

Lorsque le disque 2a est en position pleine ouverture comme représenté fig. 2, la pression amont et aval est identique et la face côté aval des aubages 22a est soumise à cette pression bien qu'étant au contact des aubes fixes 12, mais lorsque l'on obture un peu la veine de vapeur, fig. 3, on crée des pertes de charges et la pression aval P2 est plus faible que la pression amont P1, ceci a pour résultat de plaquer le disque régulateur contre la partie fixe de la "gate valve". Ceci est particulièrement important à l'obturation totale, fig. 4, où la pression aval P2 est, par exemple, la pression du condenseur.

Ainsi, un tel dispositif de régulation de soutirage présente l'inconvénient majeur d'être limité en pression d'extraction à environ 10 à 12 bars. En effet, dans la configuration actuelle montrée à la Fig. 1, les efforts de pression agissant sur le disque régulateur 2a sont repris par les surfaces frottantes entre celui-ci et la partie fixe, y induisant des pressions spécifiques prohibitives, lors de la rotation si la pression d'extraction devient trop élevée.

La présente invention a pour but de pallier cet inconvénient.

L'invention a ainsi pour objet un dispositif intégré de régulation de soutirage destiné à équiper une turbine à vapeur, le dispositif comprenant une partie fixe similaire à un diaphragme, comportant la partie aval d'aubages distributeurs entre une couronne intérieure et une couronne extérieure, et une partie mobile située en amont de ladite partie fixe et constituant un disque régulateur comprenant, entre une couronne interne et une couronne externe, la partie amont desdits aubages distributeurs, ledit disque permettant, selon sa position angulaire, d'obstruer en totalité, en partie, ou pas du tout, le passage de la vapeur de l'amont vers l'aval, ledit disque régulateur étant soumis, sur sa surface côté aval desdites couronnes interne et externe à la pression amont, caractérisé en ce que des moyens sont prévus pour qu'au moins une partie de la surface amont de l'ensemble formé par les couronnes interne et externe du disque régulateur soit mis en communication avec l'espace situé en aval de la partie amont des aubages distributeurs, là où règne la pression aval.

Selon une réalisation de l'invention, lesdits moyens comportent au moins une partie formant contre-butée venant recouvrir au moins une partie de la surface amont de l'ensemble formé par les couronnes interne et externe dudit disque régulateur, avec un léger jeu de fonctionnement, ledit disque régulateur comportant au moins une gorge annulaire débouchant en regard de ladite partie formant contre-butée, au moins un canal reliant ladite gorge à l'espace situé en aval de ladite partie amont desdits aubages distributeurs du disque régulateur, où règne la pression aval.

Selon une autre caractéristique, ledit canal aboutit à un bassin aval effectué sur la face aval de ladite partie amont des aubages distributeurs du disque régulateur.

Ainsi, grâce à l'invention, il est possible d'augmenter la pression maximale jusqu'à laquelle le dispositif de régulation de soutirage de vapeur peut fonctionner correctement.

En outre, les moyens de l'invention n'entraînent qu'une faible augmentation de l'encombrement par rapport à une "gate valve" classique.

Selon un premier mode de réalisation particulier de l'invention, ladite partie formant contre-butée est prévue à la périphérie de ladite partie fixe.

Dans un deuxième mode de réalisation particulier de l'invention, ladite partie formant contre-butée est prévue au niveau de l'alésage interne de ladite partie fixe.

Selon un troisième mode de réalisation particulier de l'invention, ledit dispositif inclut deux parties formant contre-butée, l'une étant prévue à la périphérie de ladite partie fixe et l'autre étant prévue au niveau de la zone centrale de celle-ci.

D'autres caractéristiques et avantages de l'invention apparaîtront à la lecture de la description suivante de trois modes de réalisation préférentiels de l'invention, donnés à titre de simples exemples illustratifs et non limitatifs, et en référence aux dessins annexés dans lesquels :

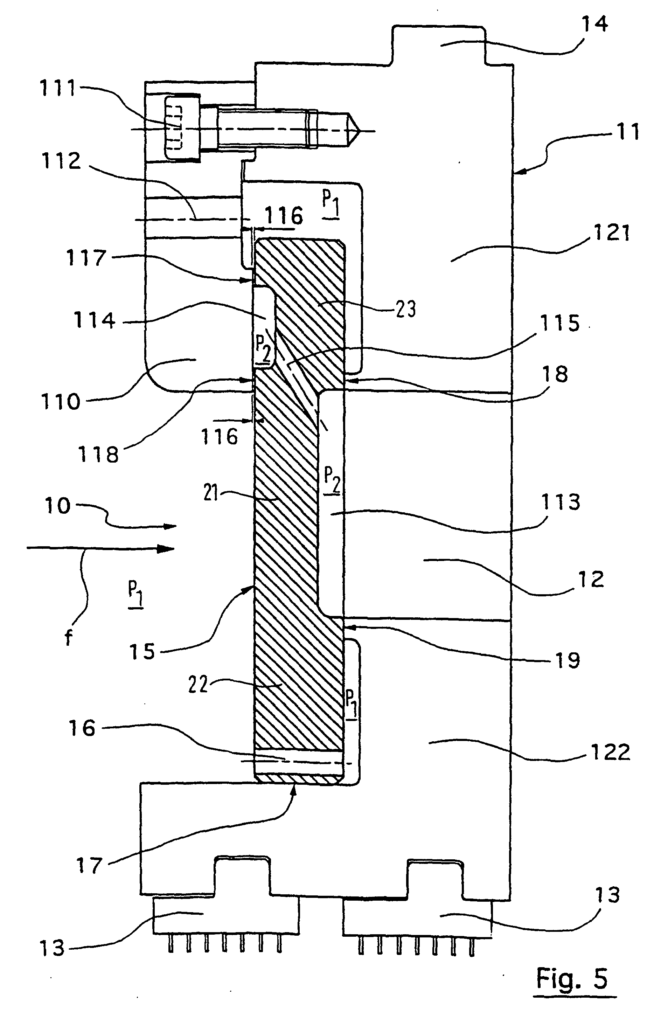

- la fig. 5 illustre une vue schématique de côté simplifiée d'un premier mode de réalisation particulier d'un dispositif de régulation de soutirage de vapeur selon l'invention ;

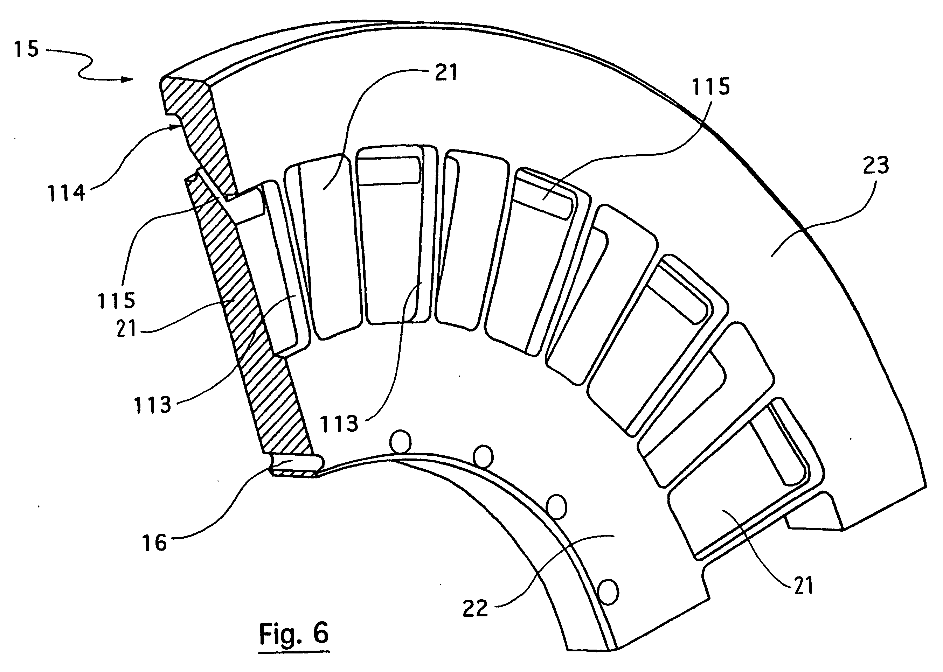

- la fig. 6 illustre une vue schématique en perspective simplifiée d'un mode de réalisation particulier de la partie mobile du dispositif de la fig. 5 ;

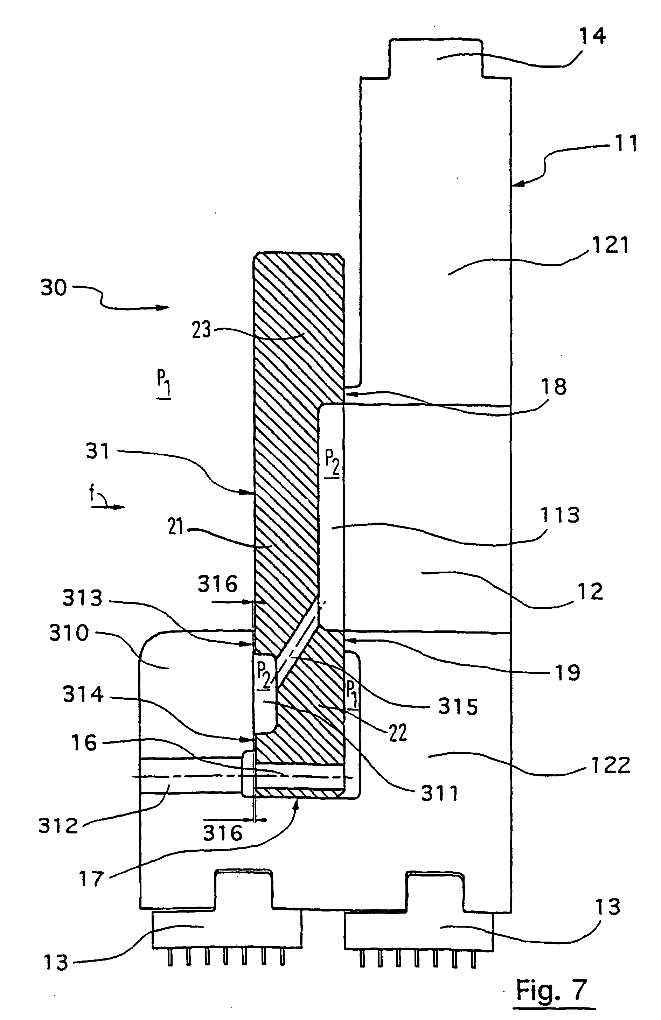

- la fig. 7 illustre une vue schématique de côté simplifiée d'un deuxième mode de réalisation particulier d'un dispositif selon l'invention ;

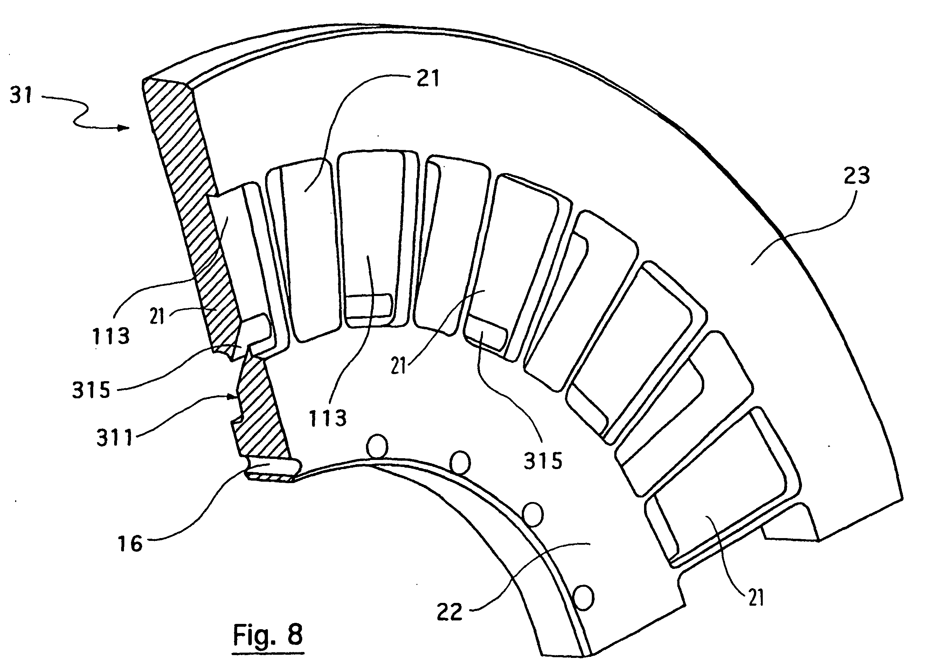

- la fig. 8 illustre une vue schématique en perspective simplifiée d'un mode de réalisation particulier de la partie mobile du dispositif de la fig. 7 ;

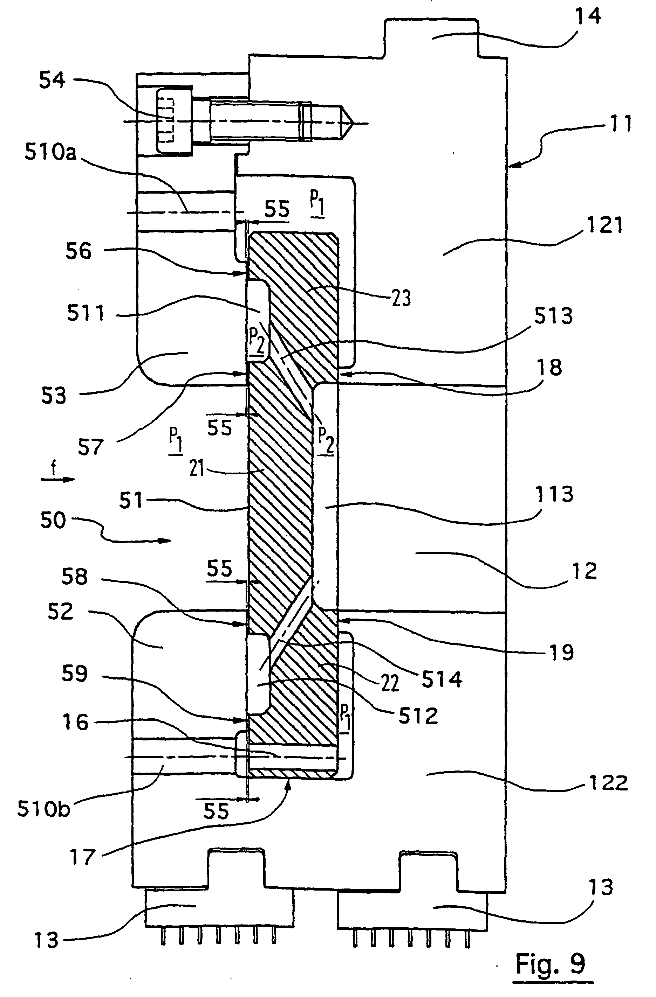

- la fig. 9 illustre une vue schématique de côté simplifiée d'un troisième mode de réalisation particulier d'un dispositif selon l'invention ;

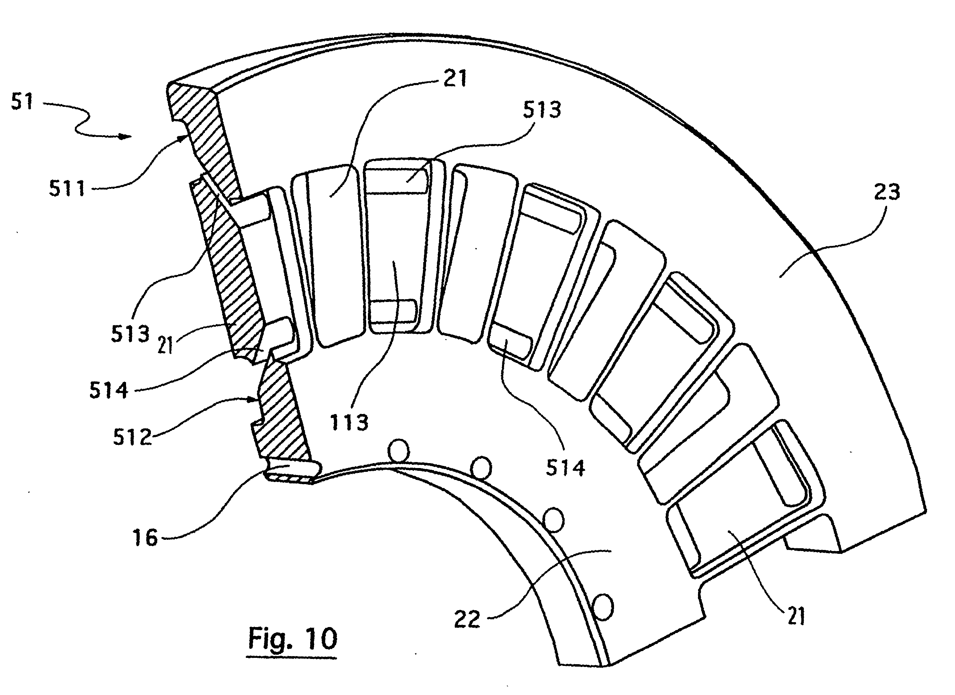

- la fig. 10 illustre une vue schématique en perspective simplifiée d'un mode de réalisation particulier de la partie mobile du dispositif de la fig. 9.

On présente maintenant, en relation avec les schémas simplifiés des fig. 5 et 6, un premier mode de réalisation du dispositif de régulation de soutirage 10 selon l'invention.

D'une façon générale dans la suite de la présente description, on suppose que le fluide alimente, par la gauche, le dispositif de régulation de soutirage de la vapeur, puis ressort, par la droite, de ce même dispositif. En d'autres termes, on désigne d'une part par face amont la face gauche du dispositif, et d'autre part par face aval la face droite de ce même dispositif.

De façon classique, un dispositif 10 de régulation de soutirage de la vapeur (circulant dans le sens indiqué par celui de la flèche référencée f) comporte une partie 11 fixe présentant une architecture similaire à celle d'un diaphragme. En effet, la partie 11, fixe, ne comporte que la partie aval 12 des aubages distributeurs. On rappelle qu'un diaphragme présente une structure de couronnes comprenant une couronne 121 extérieure et une couronne 122 intérieure.

La partie aval 12 des aubages distributeurs est solidaire des couronnes 121, 122 extérieure et intérieure. L'alésage de la couronne 122 intérieure est équipée de garnitures 13 d'étanchéité limitant les fuites de la vapeur vers l'aval. La périphérie de la couronne 121 est, quant à elle, munie d'un épaulement 14 extérieur assurant le positionnement du dispositif 10 intégré de régulation à l'intérieur d'une turbine. Par ailleurs, le dispositif 10 comporte une partie mobile constituée par un disque régulateur 15.

Ce disque régulateur 15, représenté isolément en perspective partielle fig. 6, comprend deux couronnes concentriques, l'une interne 22 et l'autre externe 23, encadrant la partie amont 21 des aubages distributeurs 12, 21.

Le dispositif 10 constitué de la partie fixe 11 et du disque régulateur 15 constitue un obturateur tournant.

Le disque régulateur 15 tourne autour de l'axe de la machine en étant supporté par un guidage 17 de la partie fixe 11. Les forces de pression dirigées de l'amont vers l'aval plaquent le disque régulateur 15 sur la partie fixe 11 contre des portées annulaires de frottement externe et interne 18, 19 de cette partie fixe 11.

Des trous 16 d'équilibrage de la pression permettent de soumettre la face arrière de la couronne interne 22 du disque régulateur 15 à la pression amont P1.

Conformément à l'invention, la pression P2 régnant dans la veine vapeur en aval de la partie amont 21 des aubages distributeurs 12, 21 est reportée sur au moins une partie de la surface amont de l'ensemble formé par les couronnes interne 22 et externe 23 du disque régulateur 15 de façon à compenser en partie, en totalité, ou même à sur-compenser l'effort s'exerçant sur le disque de régulation 15 de l'amont vers l'aval à cause de la différence de pression P1-P2 s'exerçant sur la face amont et la face aval de la partie amont 21 des aubages distributeurs. Cette compensation dépend de la valeur de la surface sur laquelle on reporte cette pression aval P2.

Sur la fig. 5, le moyen utilisé pour ce faire consiste en une gorge annulaire 114 faite sur la face amont de la couronne externe 23 du disque régulateur 15 reliée par un canal 115, à l'espace situé dans la veine vapeur, en aval de la partie amont 21 des aubages distributeurs, là où règne la pression P2. Avantageusement la face aval de la partie amont 21 des aubages distributeurs comporte un bassin aval 113 et le canal 115 aboutit dans ce bassin 113. La gorge annulaire 114 qui débouche à l'extérieur de la couronne externe 23 est fermée par une partie 110 formant contre-butée liée à la partie fixe 11, venant recouvrir en partie la face amont du disque externe 23 avec un léger jeu de fonctionnement 116.

Un ou plusieurs canaux 112 effectués dans la partie 110 permettent à la face arrière de la couronne externe 23 d'être à la pression amont P1. La partie 110 est fixée à la partie fixe 11 par des vis 111. La partie 110 formant contre-butée et "fermant" la gorge 114 vient recouvrir la face amont de la couronne externe 23, avec le faible jeu 116, le long de deux surfaces annulaires 117 et 118 externe et interne encadrant la gorge 114.

Ainsi, grâce à l'invention, la pression régnant dans la gorge 114 est la pression aval P2 et l'on peut calculer la surface de cette gorge 114 pour qu'elle soit égale, inférieure ou supérieure à la surface aval de la partie amont 21 des aubages distributeurs soumise à la pression aval P2, laquelle est maximale lorsque l'on est en obturation totale comme représenté fig. 4.

Il est ainsi possible de compenser en partie où même de sur-compenser l'effort que subit le disque de l'amont vers l'aval et donc de soulager la pression exercée par le disque 15 sur les portées 18, 19. Ceci permet d'augmenter la pression de soutirage.

Le faible jeu 116, évidemment nécessaire au fonctionnement, génère une fuite permanente de fluide qui est drainée par les canaux 115. Cette fuite permanente présente l'avantage de garantir un débit de balayage anti-échauffement des étages de la turbine situés en aval et ce, de façon indépendante du degré de fermeture effectué par le disque régulateur 15.

On présente maintenant, en relation avec les schémas simplifiés des fig. 7 et 8, un deuxième mode de réalisation du dispositif 30 selon l'invention.

Les éléments décrits en relation avec la fig. 5 conservent les mêmes références. On ne décrit ici que les aspects spécifiques à ce deuxième mode de réalisation.

Dans ce mode de réalisation de l'invention, la partie 310 formant contre-butée est prévue au niveau du guidage 17 de la partie 11 fixe, c'est-à-dire à hauteur de l'alésage du disque régulateur mobile 31. La périphérie du disque régulateur 31 est donc libre. Dans certaines conditions et notamment lorsque l'encombrement central est peu important, on peut y prévoir par exemple un bras de manoeuvre nécessaire à la rotation du disque régulateur 31.

La gorge 311 annulaire amont est donc placée sur la zone centrale du disque régulateur 31 mobile, c'est-à-dire sur la couronne interne 22, et entre des surfaces 313, 314 annulaires externe et interne amont centrales.

Les canaux 312 d'équilibrage traversant la partie 310 formant contre-butée sont sensiblement à la même hauteur que les trous 16 d'équilibrage pratiqués dans la couronne interne 22 du disque régulateur 31, facilitant en cela les échanges de fluide entre l'amont (de la partie 310 formant contre-butée) et l'aval de la couronne interne 22.

Le jeu 316 est prévu entre la partie 310 formant contre-butée et le disque régulateur 31, à hauteur des surfaces 313, 314 annulaires externe et interne amont inférieures.

La partie 11 fixe et la partie 310 formant contre-butée constituent une seule et unique pièce. Aucun moyen de fixation n'est alors nécessaire pour lier ces deux parties entre elles. L'installation du dispositif 30 est plus rapide du fait de la suppression d'une étape de fixation de ces deux parties entre elles (c'est-à-dire la partie 310 formant contre-butée et la partie 11 fixe).

Les canaux 315 traversent le disque régulateur 31 pour reporter dans la gorge annulaire 311 la pression aval P2 régnant dans les bassins avals 113.

La gorge annulaire 311 est pratiquée sur la face amont de la couronne interne 22 du disque régulateur 31.

On présente maintenant, en relation avec les schémas simplifiés des fig. 9 et 10, un troisième mode de réalisation du dispositif 50 selon l'invention.

Les éléments décrits en relation avec la fig. 5 conservent les mêmes références. On ne décrit ici que les aspects spécifiques à ce troisième mode de réalisation de l'invention.

Ce troisième mode de réalisation de l'invention est une juxtaposition du premier et du deuxième modes de réalisation de l'invention décrits ci-dessus.

Plus exactement, le dispositif 50 de régulation de soutirage comprend deux parties 52, 53 formant contre-butée. La première partie 52 formant contre-butée, située à hauteur de l'alésage du disque régulateur 51, constitue avec la partie 11 une seule et unique pièce. La seconde partie 53 formant contre-butée est, quant à elle, fixée, par exemple au moyen d'une vis 54 à la périphérie de la partie 11 fixe. Ce dispositif 50 peut être installé même lorsque l'espace disponible est réduit, en supposant toutefois qu'il présente, de manière sensiblement égale, de la place d'une part au niveau de la périphérie du disque régulateur 51, et d'autre part au niveau de l'alésage du disque régulateur.

Un tel dispositif de régulation de soutirage présente l'avantage de permettre une répartition sensiblement égale des forces de pression exercées, depuis l'amont vers l'aval, sur les couronnes intérieure 22 et extérieure 23 du disque régulateur 51. En outre, les deux parties 52, 53 formant contre-butée se répartissent également, de manière sensiblement égale, les forces de pression exercées, depuis l'aval vers l'amont, sur leurs faces actives (c'est-à-dire les faces tournées vers le disque régulateur 51).

Un jeu 55 est prévu entre les deux parties 52, 53 formant contre-butée et le disque régulateur mobile 51 à hauteur des surfaces 56, 57, 58, 59 annulaires externes et internes amont respectivement.

Chaque partie 52, 53 formant contre-butée comporte un ou plusieurs canaux 510b, 510a d'équilibrage respectivement qui la traversent.

Le couronne externe 23 du disque régulateur 51 comporte sur sa face amont une gorge annulaire extérieure 511 et la couronne interne 22 comporte sur sa face amont une gorge annulaire intérieure 512. Les gorges sont "fermées" par les parties 53, 52 formant contre-butée, avec le jeu indispensable de fonctionnement 55. Chacune des gorges 511, 512 annulaires amonts extérieure et intérieure communique, via au moins un premier canal 513 centripète et au moins un second canal 514 centrifuge avec au moins un bassin 113 aval.

Ainsi, comme dans les exemples précédents, la pression aval P2 régnant au niveau des bassins avals 113 et s'exerçant sur la face aval des parties d'aubages 21 du disque régulateur 51 est reportée dans les gorges 511 et 512 et s'exerce donc également sur une portion de surface amont du disque régulateur 51.

## Revendications

1. Dispositif intégré de régulation de soutirage destiné à équiper une turbine à vapeur, le dispositif comprenant une partie fixe (11) similaire à un diaphragme, comportant la partie aval (12) d'aubages distributeurs (12, 21) entre une couronne intérieure (122) et une couronne extérieure (121), et une partie mobile située en amont de ladite partie fixe (11) et constituant un disque régulateur (15, 31, 51) comprenant, entre une couronne interne (22) et une couronne externe (23), la partie amont (21) desdits aubages distributeurs (12, 21), ledit disque permettant, selon sa position angulaire, d'obstruer en totalité, en partie, ou pas du tout, le passage de la vapeur de l'amont vers l'aval, ledit disque régulateur (15) étant soumis, sur sa surface côté aval desdites couronnes interne (22) et externe (23) à la pression amont (P1), **caractérisé en ce que** des moyens (110, 114, 115 ; 310, 311, 315 ; 52, 512, 514, 53, 511, 513) sont prévus pour qu'au moins une partie de la surface amont de l'ensemble formé par les couronnes interne et externe (22, 23) du disque régulateur (15, 31, 51) soit mis en communication avec l'espace situé en aval de la partie amont (21) des aubages distributeurs (21, 12), là où règne la pression aval (P2).

2. Dispositif selon la revendication 1, **caractérisé en ce que** lesdits moyens comportent au moins une partie (110 ; 310 ; 52, 53) formant contre-butée venant recouvrir au moins une partie de la surface amont de l'ensemble formé par les couronnes interne et externe (22, 23) dudit disque régulateur (15, 31, 51), avec un léger jeu de fonctionnement (116 ; 316 ; 55), ledit disque régulateur (15, 31, 51) comportant au moins une gorge annulaire (114 ; 311 ; 511, 512) débouchant en regard de ladite partie formant contre-butée, au moins un canal (115 ; 315 ; 513, 514) reliant ladite gorge à l'espace situé en aval de ladite partie amont (21) desdits aubages distributeurs (12, 21) du disque régulateur (15, 31, 51), où règne la pression aval (P2).

3. Dispositif selon la revendication 2, **caractérisé en ce que** ledit canal (115 ; 315 ; 513, 514) aboutit à un bassin aval (113) effectué sur la face aval de ladite partie amont (21) des aubages distributeurs du disque régulateur (15,31,51).

## Claims

1. An integrated bleed regulator system adapted to be fitted to a steam turbine, the system including a fixed part (11) resembling a diaphragm and including a downstream part (12) of distributor blades (12, 21) between an inner ring (122) and an outer ring (121) and a moving part upstream of said fixed part (11) and constituting a regulator disk (15, 31, 51) comprising an upstream part (21) of said distributor blades (12, 21) between an inner ring (22) and an outer ring (23), in which system said disk, according to its angular position, totally or'partially obstructs the steam passage in the upstream to downstream direction or does not obstruct it at all and the surface of said regulator disk (15) downstream of said inner and outer rings (22, 23) is at the upstream pressure (P1), which system is **characterized in that** means (110, 114, 115; 310, 311, 315; 52, 512, 514, 53, 511, 513) are provided so that at least part of an upstream surface of the assembly formed by the inner and outer rings (22, 23) of the regulator disk (15, 31, 51) communicates with a space downstream of an upstream part (21) of the distributor blades (21, 12) where the pressure is the downstream pressure (P2).

2. A system according to claim 1, **characterized in that** said means include at least one part (110; 310; 52, 53) forming a counter-abutment with at least a part of the upstream surface of the assembly formed by the inner and outer rings (22, 23) of said regulator disk (15, 31, 51) with a small operating clearance (116; 316; 55), said regulator disk (15, 31, 51) includes at least one annular groove (114; 311; 511, 512) open on the side facing said counter-abutment part, and at least one passage (115; 315; 513, 514) connects said groove to the space downstream of said upstream part (21) of said distributor blades (12, 21) of the regulator disk (15, 31, 51) where the pressure is the downstream pressure (P2).

3. A system according to claim 2, **characterized in that** said passage (115; 315; 513, 514) opens into a downstream well (113) on the downstream side of said upstream part (21) of the distributor blades of the regulator disk (15, 31,51).

## Patentansprüche

1. Integrierte Entnahmeregelvorrichtung für eine Dampfturbine, mit einem einem Zwischenboden entsprechenden ortsfesten Teil (11), der den stromabwärtigen Teil (12) von Verteilerschaufeln (12, 21) zwischen einem inneren Kranz (122) und einem äußeren Kranz(121) und einen stromaufwärts von dem ortsfesten Teil (11) angeordneten beweglichen Teil umfasst, der eine Reglerscheibe (15, 31, 51) bildet, die zwischen einem inneren Kranz (22) und einem äußeren Kranz (23) den stromaufwärtigen Teil der Verteilerschaufeln (12, 21) umfasst, wobei die Scheibe es erlaubt, je nach ihrer Winkelposition den Durchgang des Dampfes von Stromauf- nach Stromabwärts vollständig, teilweise oder gar nicht zu versperren, und wobei die Reglerscheibe an ihrer stromabwärtigen Seite des inneren (22) und des äußeren Kranzes (23) dem stromaufwärtigen Druck (P1) ausgesetzt ist, **dadurch gekennzeichnet, dass** Mittel (110, 114, 115; 310, 311, 315; 52, 512, 514, 53, 511, 513) vorgesehen sind, damit wenigstens ein Teil der stromaufwärtigen Oberfläche der von innerem und äußerem Kranz (22, 23) der Reglerscheibe (15, 31, 51) gebildeten Anordnung mit dem Raum stromabwärts vom stromaufwärtigen Teil (21) der Verteilerschaufeln (12, 21) kommuniziert, wo der stromabwärtige Druck (P2) herrscht.

2. Vorrichtung nach Anspruch 1, **dadurch gekennzeichnet, dass** die Mittel wenigstens einen einen Gegenanschlag bildenden Teil (110; 310; 52, 53) umfassen, der wenigstens einen Teil der stromaufwärtigen Oberfläche der von innerem und äußerem Kranz (22, 23) der Reglerscheibe (15, 31, 51) gebildeten Anordnung mit einem leichten Betriebsspiel abdeckt, dass die Reglerscheibe (15, 31, 51) eine ringförmige Nut (114; 311; 511, 512) aufweist, die gegenüber dem den Gegenanschlag bildenden Teil mündet, und dass wenigstens ein Kanal (115; 315; 513, 514) die Nut mit dem Raum stromabwärts vom stromaufwärtigen Teil (21) der Verteilerschaufeln (12, 21) verbindet, wo der stromabwärtige Druck (P2) herrscht.

3. Vorrichtung nach Anspruch 2, **dadurch gekennzeichnet, dass** der Kanal (115; 315; 513, 514) zu einem stromabwärtigen Becken (113) führt, das an der stromabwärtigen Seite des stromaufwärtigen Teils (21) der Verteilerschaufeln der Reglerscheibe (15, 31, 51) gebildet ist.
